(19) **Europäisches Patentamt**
**European Patent Office**
**Office européen des brevets**

(11) **EP 4 761 269 A1**

(12) **EUROPEAN PATENT APPLICATION**

(43) Date of publication:
**17.06.2026 Bulletin 2026/25**

(51) International Patent Classification (IPC):
***H04Q 11/00*** *(2006.01)*

(21) Application number: **24219206.0**

(22) Date of filing: **11.12.2024**

(52) Cooperative Patent Classification (CPC):
**H04Q 11/0067;** H04Q 2011/0064

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nokia Solutions and Networks Oy
02610 Espoo (FI)**

(72) Inventor: **Perez Blanco, Ricardo
2018 Antwerpen (BE)**

(74) Representative: **Ipsilon Belgium
Bellevue 5/501
9050 Gent-Ledeberg (BE)**

(54) **MULTI-PON UPSTREAM TIME DIVISION MULTIPLEXING**

(57) Example embodiments describe an optical line terminal, OLT (301, 311), configured to communicate with respective sets of optical network units, ONUs (131 - 134), within a plurality of passive optical networks, PONs (181 - 183), optically connected to the OLT at respective PON ports (141 - 143) of at least one OLT line card (140); wherein the OLT further comprises a shared scheduler engine (303, 313) configured to allocate non-overlapping upstream transmission opportunities (251, 252, 253) to traffic-bearing entities of the ONUs within the respective PONs (181 - 183) during a shared upstream allocation interval (250) by synchronizing the time of arrival (264) at the OLT of the shared upstream allocation interval for the respective PONs (250a, 250b, 250c).

Fig. 3

## Description

### Field of the Invention

Various example embodiments relate to time division multiplexing in a passive optical network, PON. In particular, to upstream time division multiplexing for multiple PONs connected to an optical line terminal, OLT.

### Background of the Invention

In a passive optical network, PON, at least one optical line terminal, OLT, at the network side connects to one or more optical network units, ONUs, at the user side. Multiple PONs may share an OLT by optically connecting respective sets of ONUs to the same OLT. To this end, the OLT may comprise a line card with a plurality of PON ports configured to optically connect to a set of ONUs. A typical line card may comprise, for example, sixteen PON ports. The line card further comprises circuitries for managing the traffic on the respective PONs, i.e. media access control circuitries, and for receiving and processing upstream transmissions received from the ONUs, i.e. burst mode receiver circuitries. The line card thus comprises a set of these circuitries for each of the PON ports on the line card, wherein each set is configured to support a different PON.

Fixed access networks are transitioning towards new PON technologies with higher data rates, e.g. XGS-PON, 25GS-PON, and HS-PON. It is a challenge to provide line cards that support a sufficient number of PON ports for these new PON technologies as some burst mode receiver circuitries for these new PON technologies can have an increased cost, an increased power consumption, and/or an increased silicon area.

### Summary of the Invention

The scope of protection sought for various embodiments of the invention is set out by the independent claims. The embodiments and features described in this specification that do not fall within the scope of the independent claims, if any, are to be interpreted as examples useful for understanding various embodiments of the invention.

Amongst others, it is an object of embodiments of the invention to enable sharing of burst mode receiver circuitries in time between a plurality of passive optical networks, PONs, optically connected to the same optical line terminal, OLT.

This object is achieved, according to a first example aspect of the present disclosure, by an optical line terminal, OLT, configured to communicate with respective sets of optical network units, ONUs, within a plurality of passive optical networks, PONs, optically connected to the OLT at respective PON ports of at least one OLT line card; wherein the OLT further comprises a shared scheduler engine configured to allocate non-overlapping upstream transmission opportunities to traffic-bearing entities of the ONUs within the respective PONs during a shared upstream allocation interval by synchronizing the time of arrival at the OLT of the shared upstream allocation interval for the respective PONs.

Existing OLTs typically comprise a scheduler engine, also referred to as bandwidth mapper, for each of a plurality of PON ports. Different sets of ONUs may be optically connected to the respective PON ports. An OLT line card of a typical OLT may, for example, comprise 16 scheduler engines for supporting up to 16 PONs that are optically connected to the OLT. Each of these scheduler engines is configured to allocate upstream transmission opportunities for a respective set of ONUs connected to one of the PON ports. Upstream transmission opportunities are time intervals during which an ONU of a respective set may transmit upstream signals or bursts to the OLT. These upstream transmission opportunities are allocated within a portion of an upcoming upstream frame of the PON referred to as an upstream allocation interval. The respective scheduler engines are thus configured to allocate transmission opportunities to the ONUs of a PON connected to their associated PON port within an upstream allocation interval specific to that PON.

While the respective scheduler engines are configured to allocate transmission opportunities without overlap within their associated PON, the respective scheduler engines do not consider the upstream transmission opportunities allocated to other ONUs within the other PONs that are optically connected to the OLT. This can result in upstream bursts from the different PONs arriving simultaneously or overlapping at the OLT, as overlapping transmission opportunities can be allocated to ONUs of the different PONs connected to the OLT. It is thus a challenge to share burst mode receiver circuitry for receiving and/or processing upstream bursts of multiple PONs optically connected to the same OLT in time, as the OLT typically needs to be able to process the simultaneously arriving bursts of different PONs in parallel.

To this end, the shared scheduler engine according to the present disclosure is configured to allocate transmission opportunities to the ONUs within a plurality of PONs, i.e. considering all ONUs optically connected to the OLT. In other words, the shared scheduler engine is configured to allocate upstream transmission opportunities for the respective sets of ONUs connected to the respective PON ports of the OLT line card. The shared scheduler engine may thus avoid overlap between transmission opportunities for ONUs belonging to the respective PONs similarly to how a typical scheduler engine would avoid overlap between transmission opportunities for ONUs belonging to the same PON.

The shared scheduler engine is configured to allocate these transmission opportunities during an upcoming timeframe or period referred to as a shared upstream allocation interval. The shared upstream allocation interval may thus comprise non-overlapping transmission opportunities allocated to ONUs of the plurality of PONs connected to the OLT.

This can still result in upstream bursts from the different PONs that arrive simultaneously or overlapping at the OLT as the downstream frames of the different PONs may be non-synchronized, and the transmission delays of the ONUs may vary due to different fibre lengths and fibre reach. In other words, even if the shared scheduler allocates non-overlapping transmission opportunities to all ONUs connected to the OLT, bursts transmitted during these non-overlapping transmission opportunities may still overlap when received by the OLT due to asynchrony and differences in propagation delays of the respective PONs.

As such, the OLT is further configured to synchronize the time of arrival of the shared upstream allocation interval at the OLT for the respective PONs. In doing so, the upstream bursts transmitted by the ONUs of the different PONs arrive substantially as scheduled by the shared scheduler engine. In other words, the time of arrival of the upstream bursts transmitted by the ONUs of the different PONs substantially corresponds to the relative timing of the upstream transmission opportunities within the upstream allocation interval. Synchronizing the time of arrival of the shared upstream allocation interval thus allows receiving the upstream bursts at the OLT substantially as scheduled by the shared scheduler engine.

This enables upstream time division multiplexing for a plurality of PONs optically connected to an OLT. This has the advantage that burst mode receiver circuitries for receiving and/or processing upstream bursts can be shared in time among multiple PONs or PON ports. For example, a single decoder circuitry within the OLT may be used to decode the upstream bursts received from the different PONs connected to the OLT, as overlap between the arrival of these upstream bursts can be avoided. This has the further advantage that it can reduce power consumption at the OLT and that it can reduce the required silicon area within the OLT.

It is a further advantage that the start of the downstream frames of the respective PONs connected to the OLT do not have to be synchronized, and that the respective PONs can have different fibre lengths and/or fibre reach. It is a further advantage that the number of PON ports per OLT line card, i.e. the port density of an OLT line card, can be maintained for higher data rate PON technologies. It is a further advantage that an OLT according to the present disclosure is compatible with existing PON standards and technologies. It is a further advantage that the upstream transmission opportunities for the respective PONs do not have to be grouped together into fixed subframes of the upstream frames as this can underutilize the available PON capacity, nor into subframes of dynamic length as this can be computationally inefficient and relatively slow.

According to an example embodiment, synchronizing the time of arrival of the shared upstream allocation interval may comprise compensating for an asynchrony in the downstream frames of the respective PONs and compensating for a difference in differential fibre distance of the respective PONs.

The differential fibre distance, sometimes also referred to as differential reach, is indicative for the difference in fibre length or the difference in propagation delay between the ONU closest to the OLT and the ONU furthest from the OLT within a PON. The differential fibre distance may thus be expressed as the maximum equalization delay within a PON, i.e. the equalization delay assigned to the closest ONU in a PON corresponding to the propagation delay of the furthest ONU in the PON.

According to an example embodiment, the shared scheduler engine may further be configured to perform shifting a start time of upstream transmission opportunities allocated to traffic-bearing entities of the respective PONs by a floating equalization delay specific to the respective PONs that compensates for an asynchrony in the downstream frames of the respective PONs and a difference in differential fibre distance of the respective PONs.

The floating equalization delay may thus be the same for the ONUs within a respective PON. The floating equalization delay may be a numerical value that is added or subtracted from the start time of the allocated upstream transmission opportunities. The start time of an upstream transmission opportunity may refer to the time offset relative to the beginning of the upstream frame that specifies when an ONU is permitted to start transmitting its upstream signal. The start time may be communicated by the OLT to each ONU as part of the upstream bandwidth allocation process, e.g. as a 16-bit number within a 'StartTime' field according to the ITU-T G.9804 standard. Shifting the start time of upstream transmission opportunities can thus be achieved by adding or subtracting the floating equalization delay to the start time for each ONU, which already comprises the necessary equalization delay for the ONUs within the respective PONs.

This allows synchronizing the time of arrival of the shared upstream allocation interval without affecting how equalization delays are determined or applied within the respective PONs. This has the advantage that negatively affecting the latency can be avoided.

According to an example embodiment, the shared scheduler engine is further configured to perform:

- periodically updating a moving sequence of upstream transmission opportunities to be allocated to the traffic-bearing entities of the respective PONs; and
- allocating one or more upstream transmission opportunities to a respective PON during the shared upstream allocation interval of an upcoming upstream frame when (502) the moving sequence comprises sufficient upstream transmission opportunities for said respective PON to cover the upcoming upstream frame of the respective PON.

Typically, the logic of a scheduler engine is executed once per frame in order to generate a bandwidth map for the next upcoming frame. By allocating transmission opportunities when the moving sequence comprises sufficient upstream transmission opportunities for a respective PON to cover the upcoming upstream frame of that respective PON, the execution frequency of the shared scheduler engine logic can be decoupled from the frame rate as bandwidth maps can be generated by the shared scheduler more often than once per frame.

According to an example embodiment, the shared scheduler engine is further configured to perform, if allocating the one or more upstream transmission opportunities exceeds a boundary of the upcoming upstream frame, splitting the boundary-exceeding upstream transmission opportunity into a first portion that fits within the boundary of the upcoming upstream frame and a second portion that is returned to the moving sequence.

According to an example embodiment, the single scheduler engine is further configured to perform, if allocating the one or more upstream transmission opportunities exceeds a boundary of the upcoming upstream frame, crossing the boundary of the upcoming upstream frame up to a threshold.

According to an example embodiment, the OLT may further be configured to instruct the ONUs within the respective PONs to delay upstream transmissions to the OLT with a floating equalization delay specific to the respective PONs that compensates for an asynchrony in the downstream frames of the respective PONs and a difference in differential fibre distance of the respective PONs.

The floating equalization delay may thus be a numerical value that is the same for the ONUs within a respective PON. The floating equalization delay may be determined during the initialization of an ONU, e.g. during discovery and ranging procedures. By delaying the upstream transmission of the ONUs within the respective PONs with the PON-specific floating equalization delay, the upstream frames of the respective PONs are synchronized. The floating equalization delay may thus correspond to a delay value that, in addition to a typically determined equalization delay of the respective ONUs according to PON standards, synchronizes the upstream frames of the respective PONs connected to the OLT. Alternatively, the floating equalization delay may correspond to a delay value that in itself synchronizes the upstream frames of the respective PONs connected to the OLT and, thus, comprises the typical equalization delay.

This allows synchronizing the time of arrival of the shared upstream allocation interval without affecting how the scheduler engine determines the start time of the upstream transmission opportunities. This has the advantage that it is easier to implement compared to, for example, shifting the start time of upstream transmission opportunities.

According to an example embodiment, the floating equalization delay specific to a respective PON may be determined based on a start of the downstream frames and a maximum equalization delay of the respective PON relative to the start of the downstream frames and the maximum equalization delay of a reference PON selected from the plurality of PONs.

Thus, the floating equalization delays for the respective PONs may be determined based on the start of the downstream frames of the respective PONs relative to the start of the downstream frames of the reference PON, thereby allowing to compensate for an asynchrony in the downstream frames of the respective PONs. The floating equalization delays for the respective PONs may further be determined based on the maximum equalization delay of the respective PON relative to the maximum equalization delay of the reference PON, thereby allowing to compensate for a difference in differential fibre distance of the respective PONs. Alternatively, the floating equalization delay specific to a respective PON may be determined relative to an arbitrary time reference.

According to an example embodiment, the floating equalization delay specific to a respective PON may be determined as a sum of the difference between the start of the downstream frames of the reference PON and the respective PON, and the difference between the maximum equalization delay of the reference PON and the respective PON.

In other words, the floating equalization delay for PON n may be determined as $fEqD_{PON_n} = DS_{Start,PON_{ref}} - DS_{start,PON_n} + EqD_{max,PON_{ref}} - EqD_{max,PON_n}$ wherein $DS_{start,PON_{ref}}$ expresses the start of the downstream frame of the reference PON, $DS_{start,PON_n}$ expresses the start of the downstream frame of PON n, $EqD_{max,PON_{ref}}$ expresses the maximum equalization delay within the reference PON, and $EqD_{max,PON_n}$ expresses the maximum equalization delay within the PON n.

According to an example embodiment, the reference PON may be an arbitrary PON selected from the plurality of PONs connected to the OLT.

According to an example embodiment, the OLT may further be configured to perform minimizing the floating equalization delays by selecting the reference PON from the plurality of PONs such that the sum is minimal for the respective PONs.

This allows minimizing the latency introduced by the floating equalization delay.

According to an example embodiment, the OLT may further be configured to perform updating the floating equalization delays for the respective PONs upon connecting one or more additional PONs to the OLT and/or upon disconnecting one or more PONs from the OLT.

In other words, the floating equalization delays for the respective PONs may be recomputed when a PON is added or removed from the OLT.

According to an example embodiment, the OLT may further comprise a shared DBA engine configured to dynamically assign bandwidth to traffic-bearing entities of the ONUs within the respective PONs, and wherein the shared scheduler engine is further configured to allocate the non-overlapping upstream transmission opportunities based on the dynamically assigned bandwidth.

The OLT may thus comprise a DBA engine that performs dynamic bandwidth assignment for all ONUs within the plurality of PONs. To this end, only one of a plurality of provided DBA engines in an OLT may be used as the shared DBA engine while the other DBA engines are not used or disabled. This has the advantage that legacy OLTs can easily be adapted according to the present disclosure. Alternatively, only one DBA engine may be provided within the OLT. This has the advantage that silicon area may be used more efficiently within the OLT, e.g. by providing a more efficient line card.

According to a second example aspect, the present disclosure relates to a method for allocating non-overlapping upstream transmission opportunities to traffic-bearing entities of respective sets of optical network units, ONUs, within a plurality of passive optical networks, PONs; wherein the plurality of PONs are optically connected to an OLT at respective PON ports of at least one OLT line card; and wherein the OLT further comprises a shared scheduler engine configured to allocate non-overlapping upstream transmission opportunities to traffic-bearing entities of the ONUs within the respective PONs during a shared upstream allocation interval; the method comprising:

- synchronizing the time of arrival of the shared upstream allocation interval at the OLT for the respective PONs.

According to a third example aspect, the present disclosure relates to an optical network unit, ONU, configured to communicate with an optical line terminal, OLT, according to example embodiments of the first aspect, within a passive optical network, PON; wherein the ONU is configured to perform:

- receiving the floating equalization delay from the OLT; and
- delaying upstream transmissions within the upstream transmission opportunities allocated to traffic-bearing entities of the ONU by the floating equalization delay.

## Brief Description of the Drawings

Fig.1 shows a schematic block diagram of example passive optical networks, PONs, connected to the same optical line terminal, OLT;

Fig. 2A shows an example of the upstream transmission opportunities allocated by respective scheduler engines of respective PONs in a typical existing OLT;

Fig. 2B shows an example embodiment of the upstream transmission opportunities allocated by a shared scheduler engine in an OLT according to the present disclosure;

Fig. 3 shows two example embodiments of an OLT comprising a shared scheduler engine according to the present disclosure;

Fig. 4 shows an example embodiment of the resulting upstream traffic at the OLT comprising the shared scheduler engine configured to allocate non-overlapping upstream transmission opportunities to ONUs within three different PONs, according to the present disclosure;

Fig. 5A shows an example embodiment to synchronize the time of arrival of the shared upstream allocation interval at the OLT;

Fig. 5B shows an alternative example embodiment to synchronize the time of arrival of the shared upstream allocation interval at the OLT;

Fig. 6 shows an example embodiment illustrating how the floating equalization delays specific to respective PONs may be determined; and

Fig. 7 shows an example embodiment of steps performed by a shared scheduler engine to allocate non-overlapping transmission opportunities by shifting the start time of upstream transmission opportunities with a floating equalization delay specific to the respective PONs.

## Detailed Description of Embodiment(s)

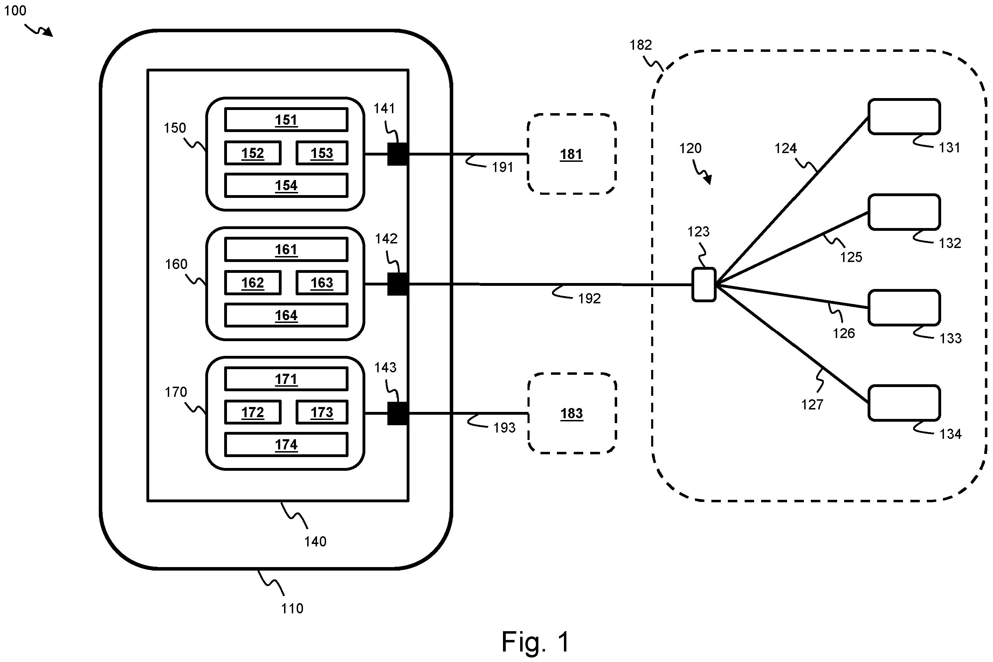

Fig.1 shows a schematic block diagram of example passive optical networks, PONs 100. Optical network units, ONUs 131 - 134, communicate with an optical line terminal, OLT 110, within the networks 100. The OLT 110 comprises a line card 140 with a plurality of PON ports 141 - 143. Each of the plurality of PON ports 141 - 143 is configured to be optically connected to a respective set of ONUs 181 - 183, thereby forming respective PONs. In other words, the set of ONUs 181 forms a first PON together with OLT 110, the set of ONUs 182 forms a second PON together with OLT 110, and the set of ONUs 183 forms a third PON together with OLT 110. These respective PONs are further referred to by the numerals 181 - 183. A respective PON 182 thus comprises an optical line terminal 110, OLT, and a plurality of ONUs 131 - 134 optically connected via an optical distribution network, ODN 120. In this example, the OLT 110 is connected to a set 182 of four ONUs 131, 132, 133, 134, however, the OLT 110 may be connected to fewer or more endpoints. The ONUs within 181 and 183 are not shown in Fig. 1. It will however be apparent that sets 181 and 183 are structured as the illustrated example 182. The number of ONUs within the sets 181 - 183 may vary. The ODN 120 has a tree structure comprising an optical feeder fibre 192, one or more passive optical splitters/multiplexors 123, and a plurality of optical distribution fibres or drop fibres 124, 125, 126, 127 that connect the splitter/multiplexor 123 to the respective ONUs 131, 132, 133, 134. In the downstream, the passive optical splitter/multiplexor 123 splits the optical signal coming from the OLT 110 into lower power optical signals for the connected ONUs 131, 132, 133, 134, while in the upstream direction, the passive optical splitter/multiplexor 123 multiplexes the optical signals coming from the connected ONUs 131, 132, 133, 134 into a burst signal for the OLT 110.

The passive optical networks 100 may be Gigabit passive optical networks, GPON, according to the ITU-T G.984 standard, 10x Gigabit passive optical networks, 10G-PON, according to the ITU-T G.987 standard, 10G symmetrical XGS-PONs according to the ITU-T G.9807 standard, four-channel 10G symmetrical NG-PON2s according to the ITU-T G.989 standard, 25GS-PONs, 50G-PONs according to the ITU-T G.9804 standard, or next generation passive optical network, NG-PONs. The passive optical networks 100 may implement time-division multiplexing, TDM, or time- and wavelength-division multiplexing, TWDM.

The OLT 110 further comprises sets of circuitries 150, 160, 170 configured to respectively support and enable communication with the ONUs optically connected to the respective PON ports 141 - 143. For example, circuitry set 150 is configured to support and enable the communication between the OLT and the set of ONUs 181. The respective circuitry sets 150, 160, 170 may comprise circuitries for managing the traffic on the respective PONs, i.e. media access control circuitries 151 - 154, 161 - 164, 171 - 174; and circuitries for receiving and processing upstream transmissions received from the ONUs, i.e. burst mode receiver circuitries (not shown in Fig. 1). The circuitries may be analogue circuitries and/or digital circuitries. The burst mode receiver circuitries are typically interconnected to form a sequence or pipeline such that each burst mode receiver circuitry contributes to receiving and decoding the optical burst signals. The media access control circuitries may include upstream logic circuitries 151, 161, 171; downstream logic circuitries 154, 164, 174; dynamic bandwidth assignment, DBA, engines 152, 162, 172; and scheduler engines 153, 163, 173.

The respective DBA engines 152, 162, 172 are thus configured to dynamically assign bandwidth to traffic-bearing entities of the ONUs within the respective PONs 181 - 183 optically connected to the OLT 110 at the respective PON ports 141 - 143. The respective scheduler engines 153, 163, 173, sometimes also referred to as bandwidth mappers, are configured to allocate upstream transmission opportunities to traffic-bearing entities of the ONUs within the respective PONs 181 - 183 optically connected to the OLT 110 at the respective PON ports 141 - 143 based on the dynamically assigned bandwidth by the respective DBA engines 152, 162, 172. In other words, the three PONs 181 - 183 of the illustrated example operate independently of each other despite sharing the OLT 110.

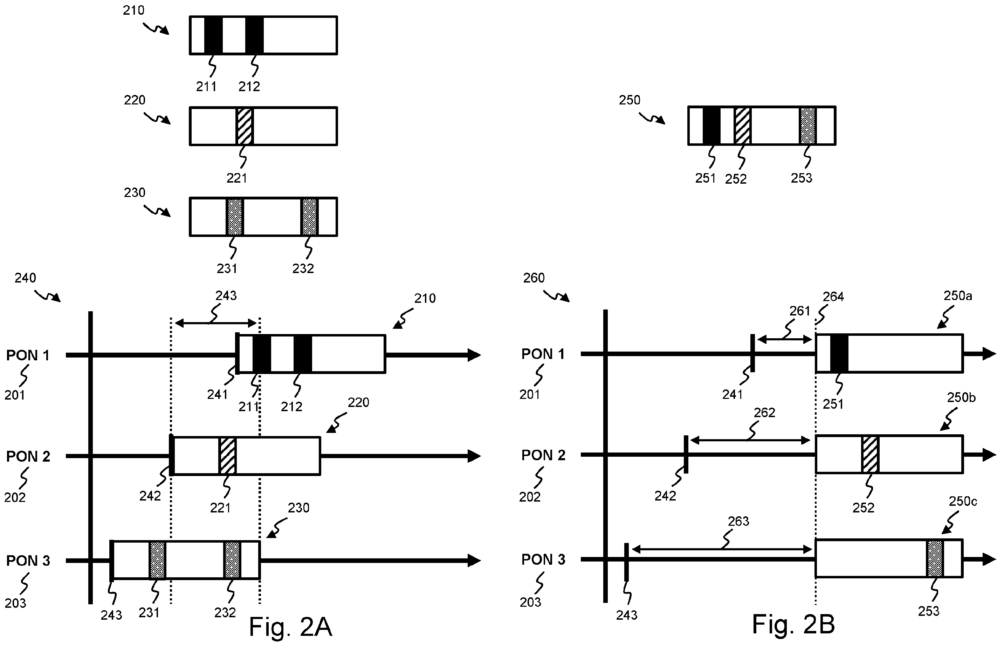

Fig. 2A shows an example of the upstream transmission opportunities 211, 212, 221, 231, 232 allocated by the respective scheduler engines 154, 164, 174 of the respective PONs in a typical existing OLT. Upstream transmission opportunities 211, 212, 221, 231, 232 are time intervals during which an ONU may transmit upstream signals or bursts to the OLT. These upstream transmission opportunities 211, 212, 221, 231, 232 are allocated within a portion of an upcoming upstream frame of the PON referred to as an upstream allocation interval 210, 220, 230. The respective scheduler engines 153, 163, 173 are thus configured to allocate transmission opportunities 211, 212, 221, 231, 232 to the ONUs of a PON connected to their associated PON port 141 - 143 within an upstream allocation interval 210, 220, 230 specific to that PON 181 - 183. For example, scheduler engine 153 may be configured to allocate transmission opportunities 211, 212 to the ONUs of set 181 within upstream allocation interval 210.

While the respective scheduler engines are configured to allocate transmission opportunities 211, 212, 221, 231, 232 without overlap within their associated PON, the respective scheduler engines do not consider the upstream transmission opportunities allocated to other ONUs within the other PONs that are optically connected to the OLT. This is illustrated in Fig. 2A, where it is shown that transmission opportunity 212 for an ONU within set 181 overlaps with transmission opportunity 221 for an ONU within set 182 and transmission opportunity 231 for an ONU within set 183. This can result in upstream bursts from the different PONs arriving simultaneously or overlapping at the OLT, as overlapping transmission opportunities can be allocated to ONUs of the different PONs connected to the OLT.

Additionally, upstream bursts from the different PONs can arrive simultaneously or overlapping at the OLT as the downstream frames of the different PONs may be non-synchronized, and the transmission delays of the ONUs may vary due to different fibre lengths and fibre reach. As such, the time of arrival of upstream bursts from different PONs may overlap even if their allocation does not overlap. This is illustrated in time diagram 240, which shows the start of the upstream frames 241, 242, 243 for the respective PONs in the OLT's view. Time diagram 240 further shows that upstream bursts originating from the respective PONs that arrive at the OLT during period 243 may overlap. For example, an upstream burst from a first PON transmitted during transmission opportunity 221 and an upstream burst from a second PON transmitted during transmission opportunity 232 can arrive simultaneously at the OLT.

It is thus a challenge to share burst mode receiver circuitry for receiving and/or processing upstream bursts of multiple PONs optically connected to the same OLT in time, as the OLT typically needs to be able to process the simultaneously arriving bursts of different PONs in parallel.

Fig. 2B shows an example embodiment of the upstream transmission opportunities 251, 252, 253 allocated by a shared scheduler engine in an OLT according to the present disclosure. The shared scheduler engine is configured to allocate transmission opportunities 251, 252, 253 to the ONUs within a plurality of PONs. For example, transmission opportunity 251 may be allocated to PON 181 of Fig. 1, transmission opportunity 252 may be allocated to PON 182 of Fig. 1, and transmission opportunity 253 may be allocated to PON 183 of Fig. 1. The shared scheduler engine is thus configured to allocate transmission opportunities 251, 252, 253 considering all ONUs optically connected to the OLT. The shared scheduler engine according to the present disclosure may operate similarly to a typical scheduler engine in the sense that it avoids scheduling overlapping transmission opportunities for ONUs belonging to different PONs similarly to how a typical scheduler engine in a typical OLT avoids overlap between transmission opportunities of ONUs belonging to the same PON. The shared scheduler engine is further configured to allocate transmission opportunities 251, 252, 253 during an upcoming timeframe or period referred to as a shared upstream allocation interval 250. The shared upstream allocation interval 250 may thus comprise non-overlapping transmission opportunities 251, 252, 253 allocated to ONUs of the plurality of PONs connected to the OLT.

The OLT according to the present disclosure is further configured to synchronize the time of arrival 264 of the shared upstream allocation interval 250a, 250b, 250c at the OLT for the respective PONs. This is illustrated in time diagram 260 of Fig. 2B. This shows that the shared upstream allocation interval 250a, 250b, 250c for the respective PONs 201 - 203 arrives substantially simultaneously at the OLT. In doing so, the upstream bursts transmitted by the ONUs of the different PONs 201 - 203 during transmission opportunities 251, 252, 253 arrive substantially as scheduled by the shared scheduler engine. In other words, the time of arrival of the upstream bursts transmitted by the ONUs of the different PONs 201 - 203 substantially corresponds to the relative timing of the upstream transmission opportunities within the upstream allocation interval 250. Synchronizing the time of arrival 264 of the shared upstream allocation interval 250a, 250b, 250c thus allows receiving the upstream bursts at the OLT substantially as scheduled by the shared scheduler engine, despite asynchrony in upstream frames 241, 242, 243 and/or differences in propagation delays among the different PONs 201 - 203.

Synchronizing the time of arrival 264 of the shared upstream allocation interval 250a, 250b, 250c can conceptually be understood as ensuring that upstream bursts transmitted by the ONUs within the different PONs 201 - 203 during the same upstream transmission opportunity allocated within the shared upstream allocation interval 250 all arrive at the OLT at the same time regardless of which ONU transmitted the burst, and regardless of which PON the ONU belongs to. For example, if three ONUs respectively belonging to three different PONs 201 - 203 would each transmit an upstream burst at the start of the shared upstream allocation interval 250a, 250b, 250c, the bursts would arrive simultaneously at the OLT, i.e. around 264.

This enables upstream time division multiplexing for a plurality of PONs optically connected to an OLT. This has the advantage that burst mode receiver circuitries for receiving and/or processing upstream bursts can be shared in time among multiple PONs or PON ports. For example, a single decoder circuitry within the OLT may be used to decode the upstream bursts received from the different PONs connected to the OLT, as overlap between the arrival of these upstream bursts can be avoided. This has the further advantage that it can reduce power consumption at the OLT and that it can reduce the required silicon area within the OLT.

It is a further advantage that the start of the downstream frames of the respective PONs connected to the OLT do not have to be synchronized, and that the respective PONs can have different fibre lengths and/or fibre reach. It is a further advantage that the number of PON ports per OLT line card, i.e. the port density of an OLT line card, can be maintained for higher data rate PON technologies. It is a further advantage that an OLT according to the present disclosure is compatible with existing PON standards and technologies. It is a further advantage that the upstream transmission opportunities for the respective PONs do not have to be grouped together into fixed subframes of the upstream frames as this can underutilize the available PON capacity, nor into subframes of dynamic length as this can be computationally inefficient and relatively slow.

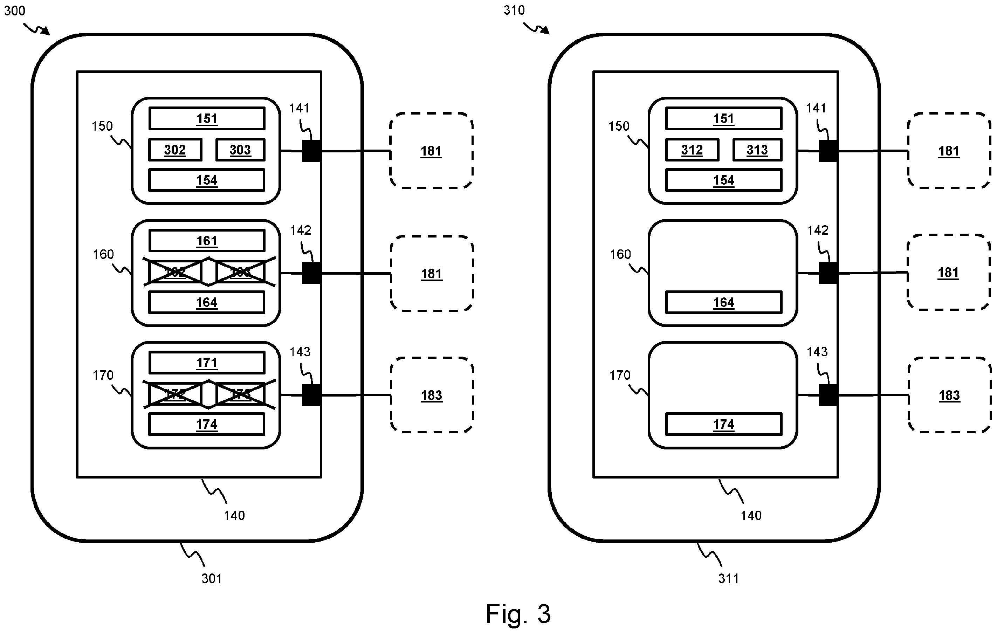

Fig. 3 shows two example embodiments 300, 310 of an OLT 301, 311 comprising a shared scheduler engine 303, 313 according to the present disclosure. Example embodiment 300 shows that the shared scheduler engine 303 may be one of a plurality of provided scheduler engines 303, 163, 173 in an OLT 301 that functions as the shared scheduler engine while the other scheduler engines, i.e. 163, 173, are not used or disabled. This is illustrated in Fig. 3 by crossing out the non-used scheduler engines 163, 173. This has the advantage that existing OLTs, e.g. the OLT 110 shown in Fig. 1, can easily be adapted according to the present disclosure. OLT 301 may further comprise a shared DBA engine 302 configured to dynamically assign bandwidth to traffic-bearing entities of the ONUs within the respective PONs 181 - 183. The shared scheduler engine 303 may then further be configured to allocate the non-overlapping upstream transmission opportunities based on the dynamically assigned bandwidth by the shared DBA engine 302. The OLT 301 may thus comprise a DBA engine 302 that performs dynamic bandwidth assignment for all ONUs within the plurality of PONs 181 - 183. To this end, only one of a plurality of DBA engines 302, 163, 172 comprised in the OLT may be used as the shared DBA engine, i.e. 302, while the other DBA engines, i.e. 162, 172, are not used or disabled. This is illustrated in Fig. 3 by crossing out the non-used DBA engines 162, 172. This has the advantage that existing OLTs, e.g. the OLT 110 shown in Fig. 1, can easily be adapted.

Example embodiment 310 shows that the shared scheduler engine 313 may be the only scheduler engine comprised within the OLT 311. In other words, the line card 140 may only comprise one single scheduler engine 313 for scheduling traffic across all its PON ports 141 - 143. This has the advantage that silicon area may be used more efficiently. OLT 311 may further comprise a shared DBA engine 312 configured to dynamically assign bandwidth to traffic-bearing entities of the ONUs within the respective PONs 181 - 183. The shared scheduler engine 313 may then further be configured to allocate the non-overlapping upstream transmission opportunities based on the dynamically assigned bandwidth. The OLT 311 may thus comprise a DBA engine 312 that performs dynamic bandwidth assignment for all ONUs within the plurality of PONs 181 - 183. To this end, only one DBA engine 312 may be provided within the OLT 311. This is illustrated in Fig. 3 by the absence of scheduler engines and DBA engines within circuitry sets 160, 170. This has the advantage that silicon area may be used more efficiently within the OLT, e.g. by providing a more efficient line card 140.

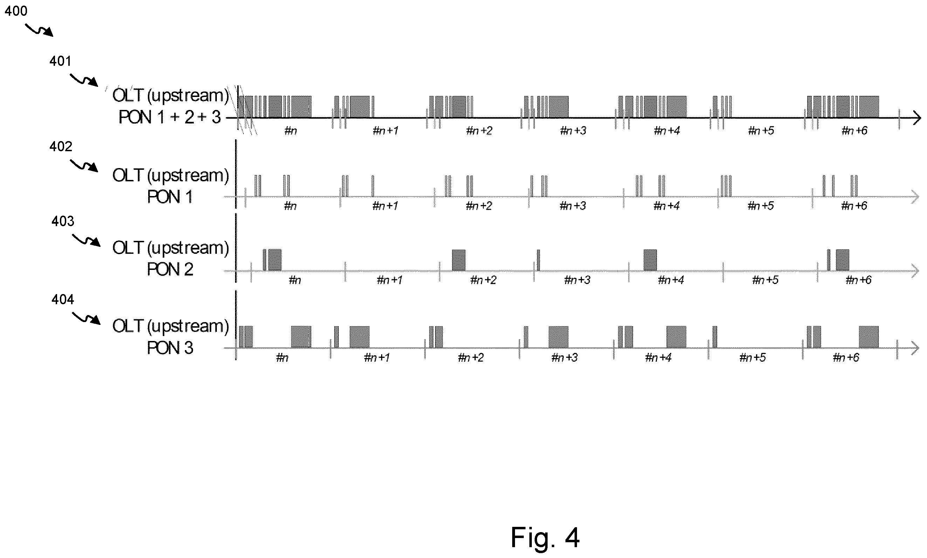

Fig. 4 shows an example embodiment of the resulting upstream traffic 400 at the OLT comprising the shared scheduler engine configured to allocate non-overlapping upstream transmission opportunities to ONUs within three PONs, i.e. PON 1, PON 2, and PON 3, according to the present disclosure. Fig. 4 shows the non-overlapping upstream bursts arriving at the OLT in timeline 401. Fig. 4 further shows the upstream bursts arriving at the OLT for the respective connected PONs 402, 403, 404. Fig. 4 further shows that the upstream frames of the respective PONs may not be synchronized. However, by synchronizing the arrival time of the shared allocation interval, overlap of the allocated transmission opportunities can be avoided.

Synchronizing the time of arrival of the shared upstream allocation interval may comprise compensating for an asynchrony in the downstream frames of the respective PONs and compensating for a difference in differential fibre distance of the respective PONs. The differential fibre distance, sometimes also referred to as differential reach, is indicative for the difference in fibre length or the difference in propagation delay between the ONU closest to the OLT and the ONU furthest from the OLT within a PON. The differential fibre distance may thus be expressed as the maximum equalization delay within a PON. The maximum equalization delay may be the equalization delay assigned to the ONU closest to the OLT which corresponds to the propagation delay of the ONU furthest from the OLT.

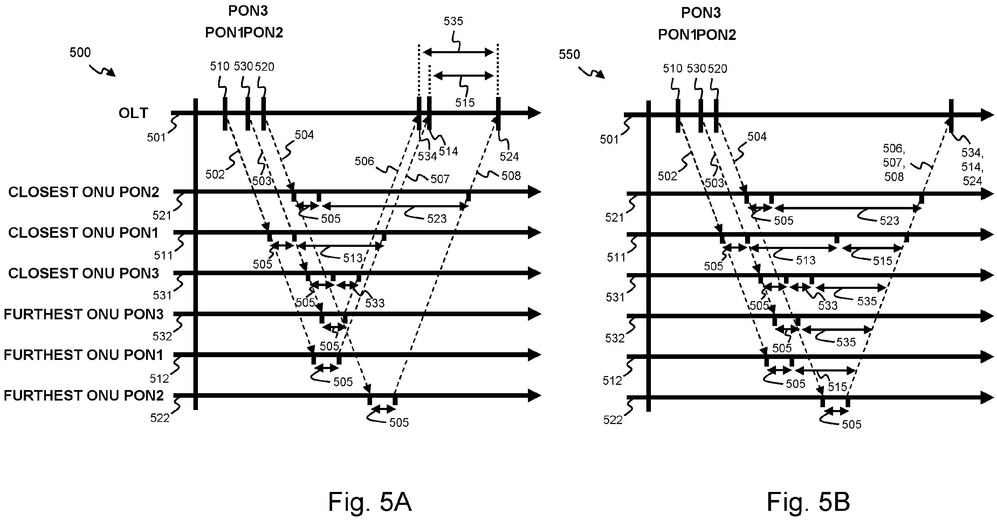

Compensating for an asynchrony in the downstream frames and compensating for a difference in differential fibre distance of the respective PONs may be achieved by shifting the start time of the upstream transmission opportunities allocated to traffic-bearing entities of the respective PONs by a floating equalization delay. This is illustrated in Fig. 5A.

Fig. 5A shows an example time diagram 500 of downstream transmissions 502, 503, 504 and upstream transmissions 506, 507, 508 between an OLT and ONUs belonging to three different PONs, i.e. PON1, PON2, and PON3. The time diagram 500 shows stacked timelines 521, 511, 531 for the ONUs located closest to the OLT within each of the three different PONs. The time diagram 500 further shows stacked timelines 532, 512, 522 for the ONUs located furthest from the OLT within each of the three different PONs. The OLT timeline 501 shows the start of the downstream frames 510, 530, 520 for PON1, PON3, and PON2, respectively. It is during these downstream frames 510, 530, 520 that the non-overlapping upstream transmission opportunities allocated by the shared scheduler engine are communicated to the ONUs within the three different PONs, i.e. during the downstream transmissions 502, 503, 504. This may, for example, be achieved by transmitting a bandwidth map to the ONUs. The time of arrival of the downstream transmissions 502, 503, 504 at the ONUs depends on the distance between the ONU and the OLT. For example, Fig. 5A illustrates that the downstream transmission 502 for PON 1 first arrives at the ONU closest to the OLT, i.e. illustrated by the intersection of 503 with timeline 511, and it takes a longer time for the downstream transmission 502 to arrive at the ONU furthest from the OLT, i.e. illustrated by the intersection of 503 with timeline 512.

Fig. 5A shows that the furthest ONUs within each PON may transmit an upstream burst following the reception of the bandwidth map after the mandatory response time 505 has elapsed. The length of the mandatory response time 505 may depend on the PON technology, e.g. $25\mu s$ according to ITU-T G.984 and G.987 standards. Fig. 5A further shows that the closest ONUs within each PON may intentionally delay the transmission of upstream bursts by an equalization delay 523, 513, 533 as to compensate for their lower propagation delay, i.e. as to ensure that upstream bursts of the same PON arrive at the OLT in a synchronized manner avoiding collisions.

Fig. 5A further shows the start of the upstream frames 534, 514, 524 of PON1, PON2, and PON3, at the OLT. Synchronizing the shared upstream allocation interval may then be achieved by shifting the start time of upstream transmission opportunities allocated to the respective PONs by a floating equalization delay 515, 535 specific to the respective PONs. The start time may refer to the time offset relative to the beginning of the upstream frame that specifies when an ONU is permitted to start transmitting its upstream signal. The start time may be communicated by the OLT to each ONU as part of the upstream bandwidth allocation process, i.e. during downstream transmissions 502, 503, 504, e.g. as a 16-bit number within a 'StartTime' field according to the ITU-T G.9804 standard. The floating equalization delay may be the same for the ONUs within a respective PON. The floating equalization delay 515, 535 may be a numerical value that is added or subtracted from the start time of the allocated upstream transmission opportunities.

In doing so, the upstream allocation interval can be synchronized at the OLT without synchronizing the upstream and/or downstream frames of the different PONs. This further allows synchronizing the time of arrival of the shared upstream allocation interval without affecting how equalization delays 523, 513, 533 are determined or applied within the respective PONs. This has the advantage that negatively affecting the latency can be avoided and that the OLT of the present disclosure is compatible with unmodified ONUs that operate according to existing standards.

Fig. 5B shows an alternative example embodiment to synchronize the time of arrival of the shared upstream allocation interval at the OLT. In this example embodiment, the OLT may be configured to instruct the ONUs within the different PONs, i.e. PON 1, PON 2, and PON 3, to delay upstream transmissions 506, 507, 508 to the OLT with the floating equalization delay 515, 535 specific to the respective PONs. This may compensate for the asynchrony in the downstream frames 510, 530, 520 and the difference in the differential fibre distance of the respective PONs. Again, the floating equalization delay 515, 535 may be a numerical value that is the same for the ONUs within a respective PON, i.e. specific to a respective PON.

The floating equalization delay may, in this example embodiment, be determined during the initialization of an ONU, e.g. during the discovery and ranging procedure. By delaying the upstream transmission 506, 507, 508 of the ONUs within the respective PONs with the PON-specific floating equalization delay 515, 535, the upstream frames 534, 514, 524 of the respective PONs are synchronized at the OLT. The floating equalization delay 515, 535 may thus correspond to a delay value that, in addition to a typically determined equalization delay 513, 533, 523 of the respective ONUs according to PON standards, synchronizes the upstream frames of the respective PONs connected to the OLT. Alternatively, the floating equalization delay may correspond to a delay value that in itself synchronizes the upstream frames of the respective PONs connected to the OLT and, thus, comprises the typical equalization delay, e.g. the sum of 513 and 515 for the ONU closest to the OLT in PON 1.

This allows synchronizing the time of arrival of the shared upstream allocation interval without affecting how the scheduler engine determines the start time of the upstream transmission opportunities. This has the advantage that it is easier to implement compared to, for example, shifting the start time of upstream transmission opportunities.

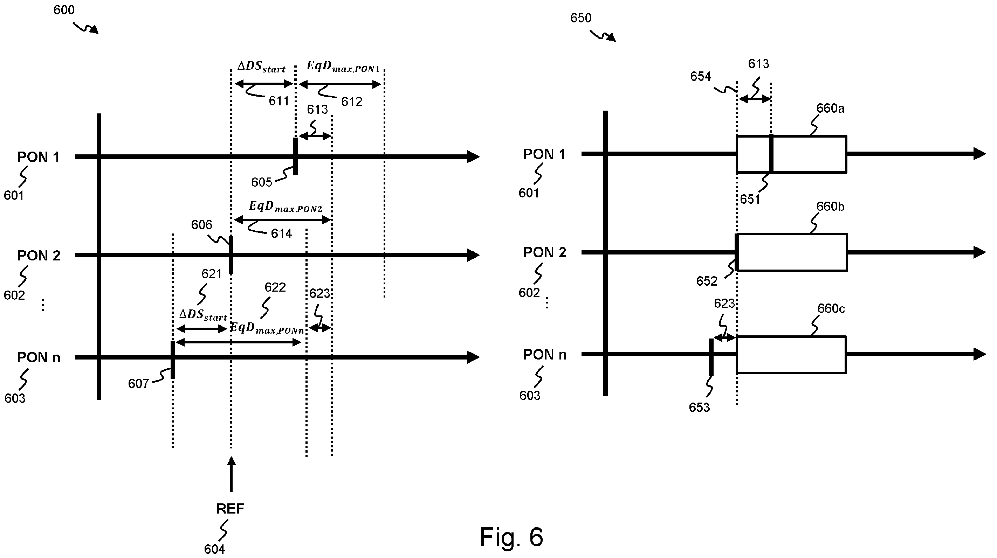

Fig. 6 shows an example embodiment illustrating how the floating equalization delays 613, 623 specific to respective PONs 601, 603 may be determined. To this end, Fig. 6 shows a time diagram 600 of the downstream frames 605, 606, 607 within different PONs 601 - 603 connected to the same OLT, and a time diagram 650 of the upstream frames 651, 652, 653 within the different PONs 601 - 603, as viewed by the OLT. The floating equalization delay 613, 623 specific to a respective PON 601, 603 may be determined based on a start 605, 607 of the downstream frames within the respective PON 601, 603 relative to the start 606 of the downstream frame of a reference PON 602, thereby allowing to compensate for an asynchrony in the downstream frames 605, 606, 607 of the respective PONs 601, 602, 603. The floating equalization delays 613, 623 may further be determined based on a maximum equalization delay 612, 622 of the respective PON 601, 603 relative to the maximum equalization delay 614 of the reference PON 602, thereby allowing to compensate for a difference in differential fibre distance of the respective PONs 601, 602, 603. The reference PON 602 may be selected from the plurality of PONs 601, 602, 603 optically connected to the OLT. The reference PON 602 may be an arbitrary PON selected from the plurality of PONs connected to the OLT. Alternatively, the floating equalization delay 613, 623 specific to a respective PON 601, 603 may be determined relative to an arbitrary time reference. It will be apparent that the maximum equalization delay 612, 614, 622 is indicative for the differential fibre distance within a PON 601, 602, 603.

According to an example embodiment, the floating equalization delay 613, 623 specific to a respective PON 601, 603 may be determined as a sum of the difference between the start of the downstream frames 606 of the reference PON 602 and the downstream frames 605, 607 of the respective PON 601, 603, and the difference between the maximum equalization delay 614 of the reference PON 602 and the respective PON 601, 603. In other words, the floating equalization delay $fEqD_{PON_n}$ 613, 623 may be determined as

$$fEqD_{PON_n} = \Delta DS_{start} + \Delta EqD_{max}$$

$$= DS_{start,PON_{ref}} - DS_{start,PON_n} + EqD_{max,PON_{ref}} - EqD_{max,PON_n}$$

wherein $DS_{start,PONref}$ expresses the start of the downstream frame 606 of the reference PON 602; $DS_{start,PONn}$ expresses the start of the downstream frame 605, 607 of the respective PON 601, 603; $EqD_{max,PONref}$ expresses the maximum equalization delay 614 within the reference PON 602; and $EqD_{max,PONn}$ expresses the maximum equalization delay 612, 622 within the respective PON 601, 603. It will be apparent that $DS_{start,PONref} + EqD_{max,PONref}$ may express the arbitrary time reference when the floating equalization delay is determined relative to an arbitrary time reference.

As discussed in relation to Fig. 2B, the determined floating equalization delay 613 for PON 601 may then be used to synchronize the time of arrival 654 of the shared upstream allocation interval 660a for PON 601 and the determined floating equalization delay 623 for PON 603 may be used to synchronize the time of arrival 654 of the shared upstream allocation interval 660c for PON 603. In other words, the floating equalization delays 613, 623 may be used to synchronize the time of arrival 654 of the shared upstream allocation interval 660a, 660c of PON 601 and PON 603 with the time of arrival 654 of the shared upstream allocation interval 660b of the reference PON, i.e. PON 602. It will be apparent that, in the example embodiment of Fig. 6, synchronizing the shared upstream allocation interval 660a, 660b, 660c for the respective PONs 601 - 603 is achieved by shifting the start time of the allocations by the floating equalization delay, as discussed in relation to Fig. 5A, as the upstream frames 651, 652, 653 are not synchronized. It will further be apparent that the floating equalization delay of the reference PON 602 may be null.

The OLT may further be configured to perform minimizing the floating equalization delays 613, 623 by selecting the reference PON from the plurality of PONs 601 - 603 such that the sum $\Delta DS_{start} + \Delta EqD_{max}$ is minimal for the respective PONs. This allows minimizing the latency introduced by the floating equalization delay 613, 623. The OLT may further be configured to perform updating the floating equalization delays 613, 623 for the respective PONs upon connecting one or more additional PONs to the OLT and/or upon disconnecting one or more PONs from the OLT. The floating equalization delays 613, 623 may thus remain substantially fixed as long as the configuration of the PONs remains unchanged.

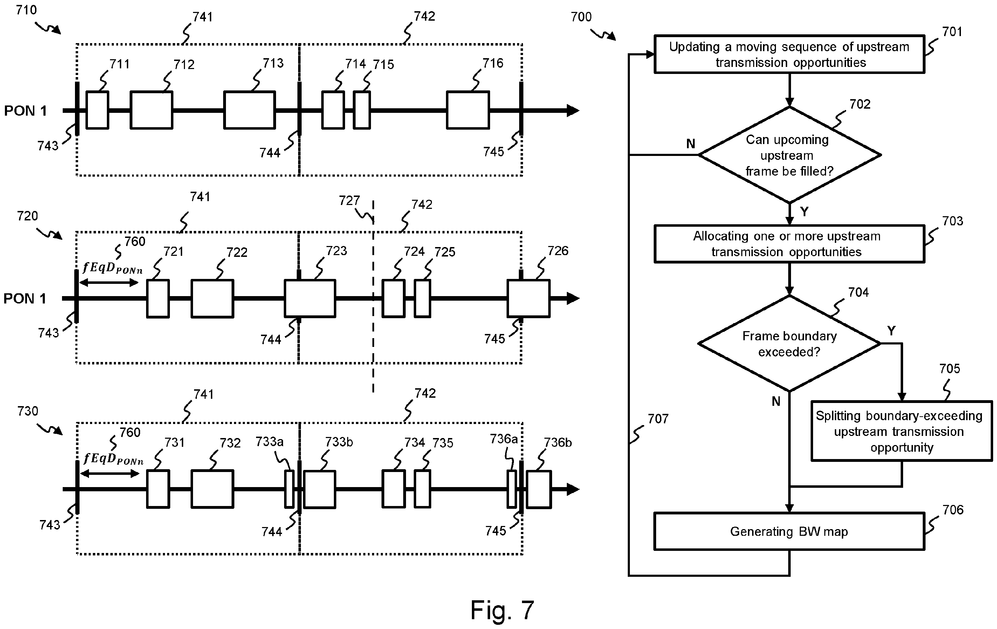

Fig. 7 shows an example embodiment of steps 700 performed by a shared scheduler engine to allocate non-overlapping transmission opportunities by shifting the start time of upstream transmission opportunities with a floating equalization delay specific to the respective PONs. These steps 700 may thus be performed by a shared scheduler engine that operates as described in relation to Fig. 5A.

In a first step 701, such a shared scheduler engine may further be configured to perform periodically updating a moving sequence of upstream transmission opportunities to be allocated to the traffic-bearing entities of the respective PONs. The moving sequence may thus be a collection or a set of upstream transmission opportunities that should be allocated to the ONUs of the connected PONs to provide them with the bandwidth assigned by the DBA engine. In a following step 702, the shared scheduler engine may evaluate if sufficient transmission opportunities are available within the moving sequence for a respective PON, e.g. PON 1. Sufficient transmission opportunities may, for example, be available if they can cover an upcoming upstream frame of the respective PON. If sufficient transmission opportunities are available, the shared scheduler engine may proceed to the next step 703 by allocating one or more upstream transmission opportunities to the respective PON during the shared upstream allocation interval. Fig. 7 shows an example 710 of two successive upstream frames 741, 742 for PON 1. The transmission opportunities 711 - 713 and 714 - 716 for ONUs within PON 1 may thus be allocated from the moving sequence when sufficient transmission opportunities are available for the PON. If in step 702 insufficient transmission opportunities are available for the respective PON, the scheduler engine may return to step 701.

Fig. 7 further shows in 720 that synchronizing the time of arrival of the upstream allocation interval by shifting the start time of upstream allocations 721 - 726 with a floating equalization delay 760 may result in one or more transmission opportunities 723, 726 that exceeding a boundary 744, 745 of the upstream frames 741, 742 of the respective PON. In this case, the shared scheduler engine may further be configured to allow crossing of the frame boundaries 744, 745 by shifting the transmission opportunities with the floating equalization delay 760 as long as the boundary-exceeding upstream transmission opportunities, e.g. 723, do not cross a threshold 727. Threshold 727 may, for example, be defined as a portion of the next upstream frame. Most ITU-T PON standards allow going over the frame boundaries 744, 745 by at most about half of an upstream frame, e.g. up to about 62.5μs.

Alternatively, the shared scheduler engine may be configured to operate according to steps 704 - 706, as illustrated by timeline 730. In this case, after allocating upstream transmission opportunities from the moving sequence in step 703, the shared scheduler engine may further be configured to check whether one or more upstream transmission opportunities exceeds a frame boundary 744, 745. For example, after allocating opportunities 721, 722, 723, the shared scheduler engine may identify that opportunity 723 crosses frame boundary 744; and after allocating opportunities 724, 725, 726, the shared scheduler engine may identify that opportunity 726 crosses frame boundary 745. The shared scheduler engine may then further be configured to perform splitting of the boundary-exceeding upstream transmission opportunity 723, 726 in step 705. The boundary-exceeding upstream transmission opportunity 723, 726 may be split into a first portion 733a, 736a and a second portion 733b, 736b such that the first portion 733a, 736a fits within the boundary 744, 745 of the upcoming upstream frame. The second portion 733b, 736b may then be returned to the moving sequence in order to be allocated during a next upstream frame.

By allocating transmission opportunities when the moving sequence comprises sufficient upstream transmission opportunities for a respective PON to cover the upcoming upstream frame of that respective PON, the execution frequency of the shared scheduler engine logic can be decoupled from the frame rate as bandwidth maps can be generated by the shared scheduler more often than once per frame.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

As used in this application, the term "circuitry" may refer to one or more or all of the following: (a) hardware-only circuit implementations (such as implementations in only analogue and/or digital circuitry) and (b) combinations of hardware circuits and software, such as (as applicable): (i) a combination of analogue and/or digital hardware circuit(s) with software/firmware and (ii) any portions of hardware processor(s) with software (including digital signal processor(s)), software, and memory(ies) that work together to cause an apparatus to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware.

**Claims**

1. An optical line terminal, OLT (301, 311), configured to communicate with respective sets of optical network units, ONUs (131 - 134), within a plurality of passive optical networks, PONs (181 - 183), optically connected to the OLT at respective PON ports (141 - 143) of at least one OLT line card (140); wherein the OLT further comprises a shared scheduler engine (303, 313) configured to allocate non-overlapping upstream transmission opportunities (251, 252, 253) to traffic-bearing entities of the ONUs within the respective PONs (181 - 183) during a shared upstream allocation interval (250) by synchronizing the time of arrival (264) at the OLT of the shared upstream allocation interval for the respective PONs (250a, 250b, 250c).

2. The OLT according to claim 1, wherein synchronizing the time of arrival (264) of the shared upstream allocation interval (250a, 250b, 250c) comprises compensating for an asynchrony (611, 621) in the downstream frames (605, 606, 607) of the respective PONs and compensating for a difference in differential fibre distance (612, 614, 622) of the respective PONs.

3. The OLT according to claim 2, wherein the shared scheduler engine (303, 313) is further configured to perform shifting (261, 262, 263, 515, 535, 613, 623) a start time of upstream transmission opportunities allocated to traffic-bearing entities of the respective PONs by a floating equalization delay (261, 262, 263, 515, 535, 613, 623) specific to the respective PONs (181 - 183) that compensates for an asynchrony (611, 621) in the downstream frames (605, 606, 607) of the respective PONs and a difference in differential fibre distance (612, 614, 622) of the respective PONs.

4. The OLT according to claim 3, wherein the shared scheduler engine (303, 313) is further configured to perform:

   - periodically updating (701) a moving sequence of upstream transmission opportunities to be allocated to the traffic-bearing entities of the respective PONs; and
   - allocating (703) one or more upstream transmission opportunities (721 - 726) to a respective PON during the shared upstream allocation interval when (702) the moving sequence comprises sufficient upstream transmission opportunities for said respective PON to cover the upcoming upstream frame (741, 742) of the respective PON.

5. The OLT according to claim 4, wherein the shared scheduler engine (303, 313) is further configured to perform, if (704) allocating the one or more upstream transmission opportunities exceeds a boundary (744, 745) of the upcoming upstream frame (741, 742) of the respective PON, splitting (705) the boundary-exceeding upstream transmission opportunity (723, 726) into a first portion (733a, 736a) that fits within the boundary of the upcoming upstream frame and a second portion (733b, 736b) that is returned to the moving sequence.

6. The OLT according to claim 4 or 5, wherein the shared scheduler engine (303, 313) is further configured to perform, if (704) allocating the one or more upstream transmission opportunities exceeds a boundary (744, 745) of the upcoming upstream frame (741, 742), crossing the boundary of the upcoming upstream frame up to a threshold (727).

7. The OLT according to claim 2, wherein the OLT is further configured to instruct the ONUs within the respective PONs to delay upstream transmissions (506 - 508) to the OLT with a floating equalization delay (515, 535) specific to the respective PONs (181 - 183) that compensates for an asynchrony (611, 621) in the downstream frames (605, 606, 607) of the respective PONs and a difference in differential fibre distance (612, 614, 622) of the respective PONs.

8. The OLT according to any of claims 3-7, wherein the floating equalization delay (613, 623) specific to a respective PON (601, 603) is determined based on a start (605, 607) of the downstream frames and a maximum equalization delay (612, 622) of the respective PON (601, 603) relative to the start (606) of the downstream frames and the maximum equalization delay (614) of a reference PON (602) selected from the plurality of PONs (601 - 603).

9. The OLT according to claim 8, wherein the floating equalization delay (613, 623) specific to a respective PON (601, 603) is determined as a sum of the difference (611, 621) between the start of the downstream frames of the reference PON and the respective PON, and the difference between the maximum equalization delay (612, 614, 622) of the reference PON and the respective PON.

10. The OLT according to claim 8 or 9, wherein the reference PON is an arbitrary PON selected from the plurality of PONs connected to the OLT.

11. The OLT according to claim 9, further configured to perform minimizing the floating equalization delays by selecting the reference PON from the plurality of PONs such that the sum is minimal for the respective PONs.

12. The OLT according to any of claims 3 - 11, further configured to perform updating the floating equalization delays for the respective PONs upon connecting one or more additional PONs to the OLT and/or upon disconnecting one or more PONs from the OLT.

13. The OLT (301, 311) according to any of the preceding claims, further comprising a shared DBA engine (302, 312) configured to dynamically assign bandwidth to traffic-bearing entities of the ONUs within the respective PONs (181 - 183), and wherein the shared scheduler engine (303, 313) is further configured to allocate the non-overlapping upstream transmission opportunities based on the dynamically assigned bandwidth.

14. A method for allocating non-overlapping upstream transmission opportunities to traffic-bearing entities of respective sets of optical network units, ONUs, within a plurality of passive optical networks, PONs; wherein the plurality of PONs are optically connected to an OLT at respective PON ports of at least one OLT line card; and wherein the OLT further comprises a shared scheduler engine configured to allocate non-overlapping upstream transmission opportunities to traffic-bearing entities of the ONUs within the respective PONs during a shared upstream allocation interval; the method comprising:

- synchronizing the time of arrival of the shared upstream allocation interval at the OLT for the respective PONs.

15. An optical network unit, ONU, configured to communicate with an optical line terminal, OLT (301, 311), according to claim 4, within a passive optical network, PON; wherein the ONU is configured to perform:

- receiving the floating equalization delay (515, 535) specific to the PON from the OLT (301, 311); and
- delaying upstream transmissions (506 - 508) within the upstream transmission opportunities allocated to traffic-bearing entities of the ONU by the floating equalization delay (515, 535).

Fig. 1

Fig. 2A

Fig. 2B

Fig. 3

Fig. 4

Fig. 5A

Fig. 5B

Fig. 6

Fig. 7

EP 4 761 269 A1

## EUROPEAN SEARCH REPORT

**Application Number**

EP 24 21 9206

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OU HIROSHI ET AL: "Integrated dynamic bandwidth allocation considering overhead in passive optical network", 2013 19TH ASIA-PACIFIC CONFERENCE ON COMMUNICATIONS (APCC), IEEE, 29 August 2013 (2013-08-29), pages 351-355, XP032578720, DOI: 10.1109/APCC.2013.6765969 [retrieved on 2014-03-11] | 1,14,15 | INV. H04Q11/00 |
| A | * the whole document * | 2-13 | |
| A | US 2013/243435 A1 (HIRTH RYAN E [US] ET AL) 19 September 2013 (2013-09-19) * page 1, paragraph 3 * * page 2, paragraph 38 - page 3, paragraph 43 * * page 4, paragraph 47 - paragraph 49 * * figures 2,3,6 * | 1-15 | |
| A | EP 3 185 487 A1 (NIPPON TELEGRAPH & TELEPHONE [JP]) 28 June 2017 (2017-06-28) * page 2, paragraph 12 - page 3, paragraph 13 * * page 3, paragraph 17 - page 5, paragraph 36 * * page 7, paragraph 64 - page 8, paragraph 65 * * figures 1,2,6 * | 1-15 | **TECHNICAL FIELDS SEARCHED (IPC)**  H04Q |

The present search report has been drawn up for all claims

| Place of search | Date of completion of the search | Examiner |
|---|---|---|
| Munich | 23 May 2025 | Carballo da Costa, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 9206

This annex lists the patent family members relating to the patent documents cited in  the above-mentioned European search report.
The members are as contained in the European Patent Office EDP file on
The European Patent Office is in no way liable for these particulars which are merely given for the purpose of information.

23-05-2025

| Patent document cited in search report | Publication date | Patent family member(s) | | Publication date |
|---|---|---|---|---|
| US 2013243435 A1 | 19-09-2013 | CN | 102379095 A | 14-03-2012 |
| | | EP | 2415185 A2 | 08-02-2012 |
| | | HK | 1167937 A1 | 14-12-2012 |
| | | TW | 201145854 A | 16-12-2011 |
| | | US | 2010254706 A1 | 07-10-2010 |
| | | US | 2013243435 A1 | 19-09-2013 |
| | | WO | 2010120485 A2 | 21-10-2010 |
| EP 3185487 A1 | 28-06-2017 | EP | 3185487 A1 | 28-06-2017 |
| | | JP | 6182271 B2 | 16-08-2017 |
| | | JP | WO2016027820 A1 | 27-04-2017 |
| | | TW | 201613297 A | 01-04-2016 |
| | | US | 2017272167 A1 | 21-09-2017 |
| | | WO | 2016027820 A1 | 25-02-2016 |

EPO FORM P0459

For more details about this annex : see Official Journal of the European Patent Office, No. 12/82